# EUROPÄISCHE PATENTSCHRIFT

(11) **EP 1 520 391 B1**
(45) Veröffentlichungstag und Bekanntmachung des Hinweises auf die Patenterteilung: **31.12.2008**
(21) Anmeldenummer: 03762390.7
(22) Anmeldetag: 06.06.2003
(51) Int. Cl.: H04L 29/06, H04L 29/08, H04M 7/00, H04L 12/28

(54) **KOMMUNIKATIONSNETZ MIT KOMMUNIKATIONSKOMPONENTEN MIT CLIENT- UND SERVER-FUNKTIONALITÄTEN UND MIT SUCHFUNKTIONEN**
COMMUNICATION NETWORK COMPRISING COMMUNICATION COMPONENTS HAVING CLIENT AND SERVER FUNCTIONALITIES AND SEARCH FUNCTIONS
RESEAU DE COMMUNICATION COMPORTANT DES COMPOSANTS DE COMMUNICATION PRESENTANT DES FONCTIONNALITES CLIENT ET SERVEUR ET DES FONCTIONS DE RECHERCHE

(30) Priorität: 08.07.2002 DE 10230688
(43) Veröffentlichungstag der Anmeldung: 06.04.2005
(73) Patentinhaber: SIEMENS AKTIENGESELLSCHAFT, 80333 München (DE)
(72) Erfinder: NEUHAUS, Ralf, 44534 Lünen (DE); UECKER, Rainer, 45470 Mülheim a.d. Ruhr (DE)
(86) Internationale Anmeldenummer: PCT/DE2003/001897
(87) Internationale Veröffentlichungsnummer: WO 2004/006529

(56) Entgegenhaltungen:
- WO-A-00/77637
- US-A1- 2001 034 752
- US-A1- 2002 064 147
- US-A1- 2002 073 204

## Beschreibung

Kommunikationsnetz mit Kommunikations-Kompönenten mit Client-und Server-Funktionalitäten und mit Suchfunktionen

Kommunikationsnetze, in denen Kommunikations-Komponenten über Datenleitungen miteinander verbunden sind, werden in verstärktem Maße anstelle leitungsvermittelnder Kommunikationsnetze verwendet. Dabei sind die Kommunikations-Komponenten oftmals in Datennetze integriert, die nach dem Internet-Protokoll arbeiten (IP-Netze), weshalb solche Anordnungen auch Voice-over-IP-Netze (VoIP) heißen. Die Kommunikations-Komponenten können dabei an einer beliebigen geografischen Stelle im Netzwerk angeordnet sein. Sie übertragen die akustischen Signale digital in Form von zu Datenpaketen gebündelten numerischen Informationen, den sog. Sprachdaten-Paketen. Zum Austausch der Sprachdaten-Pakete ist jeder Kommunikations-Komponente eine eindeutige Netzwerkadresse zugewiesen, mit der jedes auszutauschende Paket adressiert wird.

Neben Kommunikations-Komponenten, die die Funktionalität von aus der leitungsvermittelnden Kommunikation bekannten Endgeräten ausüben, beispielsweise IP-Telefonen, gibt es in den VoIP-Kommunikationsnetzen auch Kommunikations-Komponenten mit zentralen Funktionen, die von einzelnen oder mehreren anderen Kommunikations-Komponenten wechselweise oder zeitgleich verwendet werden können. Eine solche zentrale Kommunikations-Komponente, oft auch als Server-Komponente bezeichnet, kann beispielsweise ein Verzeichnis aller im Netz erreichbaren Kommunikations-Endgeräte, sog. Client-Komponenten, bereithalten. Falls von einer ersten Client-Komponente zu einer zweiten Client-Komponente eine Kommunikationsverbindung aufgebaut werden soll, kann die erste Client-Komponente bei dieser Server-Komponente die zum Aufbau der Verbindung notwendigen Daten abrufen, in erster Linie die Netzwerkadresse der zweiten Client-Komponente. Eine solche zentrale Server-Komponente wird häufig auch als "Gatekeeper" bezeichnet. Andere zentrale Server-Komponenten wie zum Beispiel Voice-Mail-Server, Gateways als Verbindungsglied zu leitungsvermittelnden Kommunikationsnetzen, Konferenzeinrichtungen u. dgl. stellen ebenfalls zentrale Dienste im paketvermittelnden Netzwerk bereit.

Aus der im Internet publizierten Schrift "The Gnutella Protocol Specification V 0.4" ist ein Verfahren bekannt, mit dem Kommunikations-Komponenten im Internet andere Kommunikations-Komponenten auffinden können, um mit diesen Dateien auszutauschen. Der Datenaustausch findet dabei aber nicht unter Zuhilfenahme einer zentralen Server-Komponente oder "Gatekeepers" statt, sondern direkt zwischen den Kommunikations-Komponenten. Solche Netzwerke, die ohne eine übergeordnete Instanz den direkten Datenaustausch zwischen Kommunikations-Komponenten vorsehen, nennt man Peer-to-Peer-Netze. Die Kommunikations-Komponenten, die sowohl Client- als auch Server-Funktionalitäten umfassen, werden in der Literatur häufig "Servents" genannt.

Im Peer-to-Peer-Netz nach der Gnutella-Spezifikation hält jede Kommunikations-Komponente - hier handelt es sich um PCs - Dateien zum Austausch mit anderen Kommunikations-Komponenten bereit. Damit es zu einem Datenaustausch kommen kann, benötigt eine suchende Kommunikations-Komponente die Netzwerkadresse einer anderen Kommunikations-Komponente, welche die gesuchte Datei zum Abruf bereit hält. Dazu versendet die suchende Kommunikations-Komponente zunächst eine erste Suchmeldung, das sogenannte "ping". Die Kommunikations-Komponenten, die eine solche "ping"-Suchmeldung erhalten, antworten der suchenden Kommunikations-Komponente mit einer Trefferantwort, dem sogenannten "pong". In dieser Trefferantwort ist die Netzwerkadresse der antwortenden Kommunikations-Komponente sowie die Anzahl der von dieser Kommunikations-Komponente zum Austausch bereitgestellten Dateien enthalten. Im nächsten Schritt sendet die suchende Kommunikations-Komponente eine zweite Suchmeldung "Query" an eine begrenzte Auswahl derjenigen Kommunikations-Komponenten, die die "ping"-Suchmeldung mit einem "pong" beantwortet haben. Diese zweite Suchmeldung enthält bereits den Dateinamen der gesuchten Datei. Falls eine Kommunikations-Konponente eine zweite Suchmeldung "Query" empfängt, die gesuchte Datei aber selbst nicht zum Austausch bereithält, so sendet sie diese Suchmeldung an andere Kommunikations-Komponenten im Netzwerk weiter, deren Adressen sie beispielsweise durch ein bereits in der Vergangenheit durchgeführtes "ping"-Verfahren ermittelt hat. Kann die Kommunikations-Komponente die gewünschte Datei jedoch zum Austausch bereitstellen, dann beantwortet sie die zweite Suchmeldung "Query" mit einer zweiten Trefferantwort "Query Hit", wodurch die suchende Kommunikations-Komponente die Datei-Übertragung mit Hilfe von im Internet-Protokoll definierten Befehlen initiieren kann.

Die Druckschrift US 2002/0073204 A1, Dutta et al. "Method and system for exchange of node characteristics for data sharing in peer-to-peer data networks" zeigt ein paketvermitteltes Netzwerk mit Kommunikations-Komponenten (hier: Computer), in welchem die Computer Dateien untereinander austauschen. Die Suche und die Übertragung der Dateien geschehen dabei auf Basis des Gnutella-Protokolls. Dem Benutzer eines Computers werden dabei charakteristische Informationen über einen aufgefundenen anderen Computer angezeigt, wobei diese Informationen zum einen die Zugangsparameter für die diesen aufgefundenen Computer betreffen, und zum anderen Informationen über die auf diesen Computer gespeicherten und für einen Dateiaustausch nutzbaren Dateien umfassen. Diese Informationen werden dem Benutzer angezeigt, so dass dieser dann entscheiden kann, ob eine Verbindung zu dem aufgefundenen Computer zum Zwecke eines Dateiaustauschs bestehen bleiben soll, oder ob diese Verbindung abgebaut werden soll.

Benötigt eine Client-Komponente die Dienste einer Server-Komponente eines bestimmten Typs, so stehen in paketvermittelnden Netzwerken oft mehrere Server-Komponenten dieses Typs zur Verfügung. In der Client-Komponente ist eine Tabelle gespeichert, in der geordnet nach dem Typ jede zugreifbare Server-Komponente mit ihrer Netzwerk-Adresse und den sonstigen zum Zugriff notwendigen Informationen verzeichnet sind. Für jeden Typ Server-Komponente ist in der Tabelle eine dieser Komponenten als sog. "Default-Komponente" gekennzeichnet, also als diejenige Komponente, welche als erste kontaktiert wird. Falls diese Default-Komponente nicht verfügbar ist oder nicht die ausreichenden Leistungsmerkmale bereitstellen kann, wird aus der gespeicherten Tabelle in einer festgelegten Reihenfolge die nächste Kommunikations-Komponente ausgewählt und kontaktiert. Dieser Vorgang wiederholt sich so lange, bis eine geeignete, zu diesem Zeitpunkt verfügbare und ausreichend leistungsfähige Server-Komponente gefunden ist.

Bei den bekannten paketvermittelnden Kommunikationsnetzen hat sich als nachteilig erwiesen, dass verschiedene Server-Komponenten des gleichen Typs immer nacheinander in einer vorher festgelegten Reihenfolge kontaktiert werden müssen. Beim Hin-zufügen oder Entfernen neuer Client- als auch Server-Komponenten sind dann jeweils umfangreiche Administrierungsvorgänge notwendig.

Aufgabe der Erfindung ist es, den zur Administration von Kommunikationsnetzen erforderlichen Aufwand zu verringern und insbesondere die Auswahl von Server-Komponenten bei mehreren alternativ verwendbaren Komponenten des gleichen Typs zu optimieren.

Die Lösung der Aufgabe erfolgt erfindungsgemäß durch die Merkmale des Patentanspruchs 1.

Die Lösung sieht vor, dass mehrere Kommunikations-Komponenten sowohl Client- als auch Server-Funktionalitäten aufweisen, wobei Informationen über die eigenen Server-Funktionalitäten durch die Client-Funktionalitäten anderer Kommunikations-Komponenten direkt abrufbar und direkt nutzbar sind. Dadurch sind die Server-Funktionalitäten der Kommunikations-Komponenten durch alle Clients nutzbar, ohne dass die Server-Funktionalitäten im Netzwerk explizit bekannt gemacht werden müssen. Durch die gleichzeitige Nutzung vieler im Kommunikationsnetz verteilter Server-Funktionalitäten ergibt sich in Summe eine hohe Leistungsfähigkeit bei einer hohen Redundanz bzw. Ausfallsicherheit.

Vorteilhafte Ausgestaltungen der Erfindung sind in den Unteransprüchen angegeben.

Der Aufwand zur Administration des Kommunikationsnetzes verringert sich insbesondere in Anordnungen mit häufig wechselnden Kommunikations-Komponenten und bei Änderungen in der Netzstruktur, wenn sich das Kommunikationsnetz mit den Kommunikations-Komponenten anhand der durch die Suchfunktionen ermittelten Informationen selbst administriert.

Die Ausfallsicherheit wird erhöht, indem eine Server-Funktionalität mehrfach im Kommunikationsnetz und in mehreren Kommunikations-Komponenten vorhanden sein kann. Dadurch lassen sich auch Funktionalitäten nach geografischen Erfordernissen im Kommunikationsnetz anordnen oder verteilen.

Wenn bei mehrfach vorhandenen Server-Funktionalitäten anhand von Zustandsinformationen eine dieser Server-Funktionalitäten zur Nutzung ausgewählt wird, wird die vergebliche Kontaktierung bereits vollständig ausgelasteter Komponenten vermieden.

Die Auslastung und die Kosten der Nutzung von Server-Funktionalitäten können optimiert werden, indem die Zustandsinformationen die aktuelle Auslastung der mehrfach vorhandenen Server-Funktionalitäten und/oder die Kosten für deren Nutzung umfassen.

Wenn eine Client-Funktionalität vor Nutzung einer Server-Funktionalität eine Berechtigung abruft, kann der Zugriff auf Kosten verursachende Dienste beschränkt und ein Datenschutzkonzept realisiert werden.

Die Berechtigungen zum Zugriff auf Server-Funktionalitäten lassen sich einfach administrieren, wenn Berechtigungen von zumindest einer Server-Funktionalität verwaltet werden.

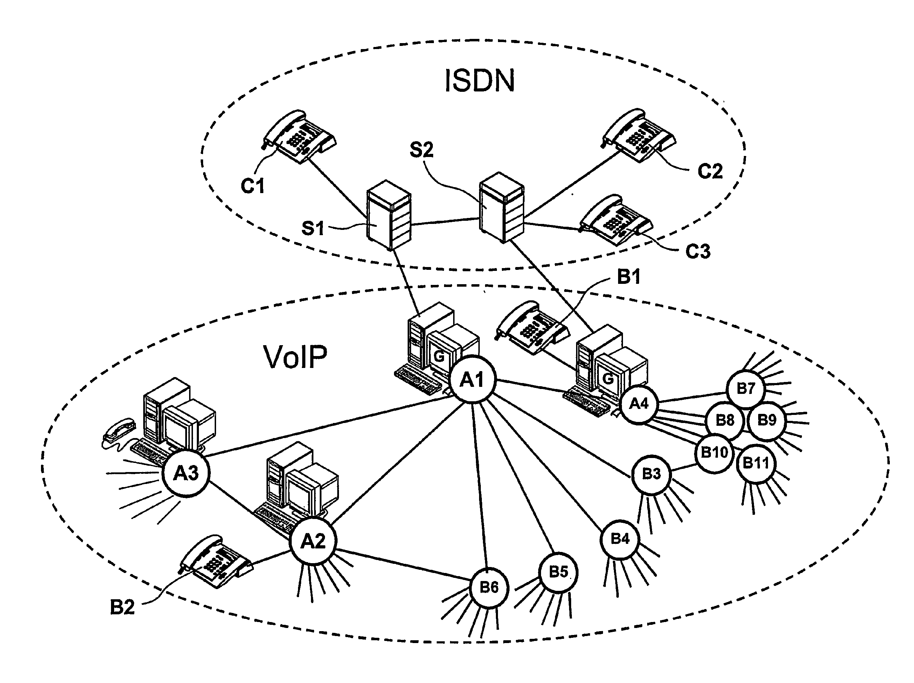

Ein Ausführungsbeispiel eines erfindungsgemäßen Kommunikationsnetzes wird nachfolgend anhand der Zeichnung beschrieben.

Die einzige Figur zeigt in schematischer Darstellung ein paketvermittelndes Kommunikationsnetz, welches mit einem leitungsvermittelnden Kommunikationsnetz verbunden ist.

In einem paketvermittelnden Kommunikationsnetz VoIP sind Kommunikations-Komponenten A1 - A4, B1 - B11 miteinander verbunden.

Bei den Kommunikations-Komponenten A1 - A4, B3 - B11 handelt es sich um Servents, also um Kommunikations-Komponenten, die sowohl Client- als auch Server-Funktionalitäten aufweisen. Bei den Komponenten B1, B2 handelt es sich um "einfache" IP-Telefone, also um Komponenten mit reiner Client-Funktionalität.

In den Kommunikations-Komponenten A1, A4 sind als Server-Funktionalität Gateways realisiert, die das paketvermittelnde Kommunikationsnetz VoIP mit dem leitungsvermittelnden Netzwerk ISDN verbinden. Die auf den Kommunikations-Komponenten A1 und A4 installierten Gateways befinden sich im Kommunikationsnetz VoIP an verschiedenen Orten und außerdem in unterschiedlichen Ortsnetzbereichen des leitungsvermittelnden Kommunikationsnetzes ISDN. Die Gateways ermöglichen Verbindungen zwischen den Kommunikations-Komponenten A1 - A4, B1 - B11 und den leitungsvermittelnden Kommunikationssystemen S1, S2 und somit den an diesen angeschlossenen ISDN-Endgeräten C1 - C3.

Die auf den Kommunikations-Komponenten A1, A4 installierten Gateways können von den Client-Komponenten B1, B2 sowie allen im paketvermittelnden Kommunikationsnetz VoIP auf den Kommunikations-Komponenten A1 - A4, B3 - B11 vorwiegend in Form von Software-Anwendungen installierten Client-Komponenten ausgewählt und genutzt werden. Dazu ist auf allen Kommunikations-Komponenten A1 - A4, B3 - B11 eine Kommunikationssoftware installiert, die sowohl die Client-Funktionalität zur Verfügung stellt als auch die eigene Kommunikations-Komponente A1 - A4, B3 - B11 daraufhin untersucht, welche Server-Funktionalitäten sie zur Verfügung stellen kann. Letzteres erfolgt zumindest beim erstmaligen Start der Kommunikations-Software. Diese Informationen werden dann derart abgespeichert, dass sie von anderen Kommunikations-Komponenten A1 - A4, B3 - B11 unter Anwendung entsprechender Suchverfahren abgerufen werden können.

Bei Kommunikationsverbindungen aus dem paketvermittelnden Kommunikationsnetz VoIP zum leitungsvermittelnden Kommunikationsnetz ISDN führt beispielsweise abhängig vom Standort des angerufenen Teilnehmers C1 - C3 die Auswahl desjenigen Gateways zu günstigeren Verbindungskosten, welches die nächstliegende Verbindung zu der Kommunikationsanlage S1, S2 aufweist, an welcher das gewünschte Endgerät C1 - C3 angeschlossen ist. Deshalb wird immer ein Gateway benutzt, welches im Ortsnetzbereich des gerufenen Teilnehmers am leitungsvermittelnden Kommunikationsnetz ISDN angebunden ist. Zur Nutzung solcher Kostenvorteile durch die Auswahl des entsprechenden Gateways ist die auf den Kommunikations-Komponenten A1 - A4, B3 - B11 installierte Kommunikations-Software mit einem Softwaremodul zur Verbindungskostenoptimierung, einem sog. "Least Cost Routing"-Modul (LCR-Modul), ausgestattet. Dieses Modul wählt für Verbindungen zum Endgerät C1 das auf der Kommunikations-Komponente A1 und für Verbindungen zu den Endgeräten C2, C3 das auf der Kommunikations-Komponente A2 installierte Gateway aus.

Obwohl die "einfachen" Kommunikations-Komponenten B1, B2 hier jeweils einem der Gateways fest zugeordnet sind, können prinzipiell auch-IP-Telefone B1, B2 mit den beschriebenen Suchfunktionen und LCR-Modulen ausgerüstet sein.

Um das Gateway auswählen zu können, muss vorher eine Initialisierung der Kommunikations-Komponente A1 - A4, B1 - B11 erfolgt sein, was nachfolgend beispielhaft für die Kommunikations-Komponente A1 beschrieben wird.

Beim erstmaligen Start der Kommunikations-Komponente A1 sucht die Kommunikations-Software der Kommunikations-Komponente A1 die eigene PC-Hardware nach Kommunikations-Ressourcen ab. Die Ressourcen, die sowohl Client- als auch Server-Funktionalitäten sein können, werden dann in einer lokalen Ressourcen-Tabelle abgespeichert. Im Falle der Kommunikations-Komponenten A1, A4 sind das ISDN-Karten, die jeweils mit einem S0-Basisanschluß an das leitungsvermittelnde Kommunikationsnetz ISDN angeschlossen sind. Diese Karten sind dadurch als Gateways nutzbar.

Im nächsten Schritt baut die Kommunikations-Komponente A1 eine Verbindung zu einer hier nicht dargestellten Lizenz-Server-Komponente auf. Der Lizenz-Server stellt dann die Informationen bereit, aus denen hervorgeht, welche Ressourcen die Kommunikations-Komponente A1 der eigenen Client-Komponente und anderen Kommunikations-Komponenten A2 - A4, B1 - B11 zur Verfügung stellt und welche Ressourcen welchen Typs der anderen Kommunikations-Komponenten A2 - A4, B3 - B11 von dieser Kommunikations-Komponente A1 genutzt werden können. Anhand dieser Informationen stellt die Kommunikations-Komponente A1 in einem "Fähigkeiten-Datensatz" eine Liste mit allen eigenen, zur Verfügung gestellten Ressourcen zum Abruf durch andere Kommunikations-Komponenten A2 - A4, B3 - B11 bereit.

Nachdem die eigenen Ressourcen dieser Kommunikations-Komponente A1 von benachbarten Kommunikations-Komponenten A2 - A4, B1 - B11 abrufbar und nutzbar sind, beginnt die Komponente A1 die Suche nach "benachbarten" Kommunikations-Komponenten A2 - A4, B3 - B6. Im Zuge dieser Suche legt die Kommunikations-Komponente A1 zur Beschleunigung späterer Suchvorgänge nach Ressourcen eine Liste der aufgefundenen benachbarten Kommunikations-Komponenten A2 - A4, B3 - B6 an.

Auf diese Weise können auch die auf den beiden Kommunikations-Komponenten A1, A4 installierten Gateways aufgefunden und genutzt werden.

Das Suchverfahren wird im Folgenden beispielhaft am Aufbau einer Fernsprechverbindung zwischen der Kommunikations-Komponente A3 im paketvermittelnden Kommunikationsnetz VoIP und dem Telefon C1 im leitungsvermittelnden Kommunikationsnetz ISDN beschrieben.

Die Kommunikations-Komponente A3 weist dazu als Client-Komponente eine Telephonie-Funktion auf. Für die netzübergreifende Verbindung benötigt sie ein Gateway, wie es auf den Kommunikations-Komponenten A1 und A4 installiert ist. Zum Auffinden eines dieser Gateways richtet die Kommunikations-Komponente A3 eine Suchanfrage an die in ihrer "Servent-Liste" verzeichneten "Nachbarn". Diese Suchanfrage wird von den Kommunikations-Komponenten A1 und A2 empfangen, wobei die Kommunikations-Komponente A1 eine Trefferantwort mit den nutzungsrelevanten Informationen über das auf ihr installierte Gateway zur Kommunikations-Komponente A3 zurücksendet. Die Kommunikations-Komponente A2 hingegen verfügt über kein Gateway und sendet die Suchanfrage an ihr bekannte benachbarte Kommunikations-Komponenten weiter, in diesem Fall die Kommunikations-Komponenten B6 und A4. Da auch die Kommunikations-Komponente A4 über ein Gateway verfügt, sendet sie eine entsprechende Trefferantwort zur Kommunikations-Komponente A3 zurück. Dort liegen jetzt die nutzungsrelevanten Informationen von zwei Gateways vor, die in der Kommunikations-Komponente A3 in eine Liste der verfügbaren Gateways eingetragen werden.

Diese Liste ist sortiert nach nutzungsrelevanten Informationen, in diesem Fall primär nach der Anzahl der verfügbaren Kanäle des Gateways und erst sekundär nach der Laufzeit der Trefferantwort im Netzwerk, die ein Maß für die "Entfernung" dieser Kommunikations-Komponente im paketvermittelnden Kommunikationsnetz VoIP darstellt. Zu den nutzungsrelevanten Informationen der Gateways gehört als geografische Angabe der Ortsnetzbereich des leitungsvermittelnden Kommunikationsnetz ISDN, in dem es an das leitungsvermittelnde Kommunikationsnetz ISDN angebunden ist. Das in der Kommunikations-Komponente A3 installierte LCR-Modul wählt zur Kostenoptimierung das auf der Kommunikations-Komponente A1 befindliche Gateway für die Verbindung über die leitungsvermittelnde Kommunikationsanlage S1 zum Endgerät C1 aus, weil diese Verbindung zum "Ortstarif" genutzt werden kann.

Die Liste der aufgefundenen Gateways wird in der Kommunikations-Komponente A3 für den Aufbau weiterer Verbindungen vorgehalten und steht zum Abruf durch andere Kommunikations-Komponenten A1, A2, A4, B3 - B11 zur Verfügung.

Die Suchfunktionen, die der Erstellung von Listen der benachbarten Kommunikations-Komponenten und der im paketvermittelnden Kommunikationsnetz VoIP verfügbaren Server-Komponenten dienen, werden in regelmäßigen Abständen neu gestartet. Dadurch wird vermieden, dass zwischenzeitlich ausgefallene oder aus dem paketvermittelnden Kommunikationsnetz VoIP entfernte Kommunikations-Komponenten A1 - A4, B3 - B11 vergeblich kontaktiert oder neu hinzugekommene Kommunikations-Komponenten nicht verwendet werden. Findet dennoch ein vergeblicher Verbindungsversuch zu einer Client- oder auch Server-Komponente statt, werden die Listen ebenso durch neu gestartete Suchvorgänge aktualisiert.

Die regelmäßige zeitgesteuerte Aktualisierung findet im vorliegendem Fall in kurzen Zeitabständen statt, weil die Listen der verfügbaren Server-Komponenten auch einen Eintrag über die aktuelle Auslastung jeder Kommunikations-Komponente umfassen, die als weiteres Kriterium zur Auswahl einer bestimmten aus mehreren Server-Komponenten dient. Ein weiterer Grund für eine regelmäßige Aktualisierung der Listen ist, dass sich Personen mit einem festgelegten Namen und einer festgelegten internen Rufnummer an jedem beliebigen Kommunikations-Komponente des paketvermittelnden Kommunikationsnetzes VoIP anmelden können. Diese Funktion wird beispielsweise im Firmennetzwerken zur freien Arbeitsplatzwahl oder zur kurzfristigen Bildung von Arbeitsgruppen verwendet. Dann ist auf allen Client-Komponenten derselben Arbeitsgruppe eine Anzeige einschaltbar, auf der jedes Gruppenmitglied mit Statusangaben, z.B. "eingeloggt", "besetzt" etc., verzeichnet ist und per "Mausklick" angerufen werden kann.

## Patentansprüche

1. Kommunikationsnetz (VoIP, ISDN),
- mit Kommunikations-Komponenten (A1 - A4, B3 - B11), die Client- und Server-Funktionalitäten aufweisen, sowie
- mit den Client-Funktionalitäten zugeordneten Suchfunktionen zur Ermittlung der aktuellen Adressen derjenigen Kommunikations-Komponenten (A1 - A4, B3 - B11), über welche die Server-Funktionalitäten nutzbar sind,
**dadurch gekennzeichnet, dass**
Informationen über die Server-Funktionalitäten einer Kommunikations-Komponente (A1 - A4, B3 - B11) durch die Client-Funktionalitäten anderer Kommunikations-Komponenten (A1 - A4, B1 - B11, C1 - C3) direkt abrufbar und nutzbar sind, wobei die Server-Funktionalitäten zur Bereitstellung nutzbarer Dienste in dem Kommunikationsnetz (VoIP, ISDN) eingerichtet sind.

2. Kommunikationsnetz (VoIP, ISDN) nach Anspruch 1,
**dadurch gekennzeichnet,**
**dass** das Kommunikationsnetz (VoIP, ISDN) mit den Kommunikations-Komponenten (A1 - A4, B1 - B11) zur Selbstadministrierung anhand der durch die Suchfunktionen ermittelten Informationen ausgebildet ist.

3. Kommunikationsnetz (VoIP, ISDN) nach Anspruch 1 oder 2,
**dadurch gekennzeichnet,**
**dass** eine Server-Funktionalität mehrfach im Kommunikationsnetz (VoIP, ISDN) und in mehreren Kommunikations-Komponenten (A1 - A4, B3 - B11) vorhanden ist.

4. Kommunikationsnetz (VoIP, ISDN) nach einem der vorhergehenden Ansprüche,
**dadurch gekennzeichnet,**
**dass** bei mehrfach vorhandenen Server-Funktionalitäten anhand von Zustandsinformationen eine dieser Server-Funktionalitäten zur Nutzung auswählbar ist.

5. Kommunikationsnetz (VoIP, ISDN) nach Anspruch 4,
**dadurch gekennzeichnet,**
**dass** die Zustandsinformationen die aktuelle Auslastung der mehrfach vorhandenen Server-Funktionalitäten und/oder die Kosten für deren Nutzung umfassen.

6. Kommunikationsnetz (VoIP, ISDN) nach einem der vorhergehenden Ansprüche,
**dadurch gekennzeichnet,**
**dass** eine Client-Funktionalität zum Abruf einer Berechtigung vor Nutzung einer Server-Funktionalität ausgebildet ist.

7. Kommunikationsnetz (VoIP, ISDN) nach Anspruch 6,
**dadurch gekennzeichnet,**
**dass** zumindest eine Server-Funktionalität zur Verwaltung der Berechtigungen vorgesehen ist.

## Claims

1. A communication network (VoIP, ISDN),
- having communication components (A1 - A4, B3 - B11) which has client and server functionalities, and
- having search functions, associated with the client functionalities, for ascertaining the current addresses of those communication components (A1 - A4, B3 - B11) which allow the server functionalities to be used,
**characterized in that**
information about the server functionalities of a communication component (A1 - A4, B3 - B11) can be retrieved and used directly by the client functionalities of other communication components (A1 - A4, B1 - B11, C1 - C3), with the server functionalities being set up to provide usable services in the communication network (VoIP, ISDN).

2. Communication network (VoIP, ISDN) according to Claim 1,
**characterized**
**in that** the communication network (VoIP, ISDN) containing the communication components (A1 - A4, B1 - B11) is designed for self-administration on the basis of the information ascertained by the search functions.

3. Communication network (VoIP, ISDN) according to Claim 1 or 2,
**characterized**
**in that** a search functionality is present a plurality of times in the communication network (VoIP, ISDN) and in a plurality of communication components (A1 - A4, B3 - B11).

4. Communication network (VoIP, ISDN) according to one of the preceding claims,
**characterized**
**in that** when server functionalities are present a plurality of times by using state information one of these server functionalities can be selected for use.

5. Communication network (VoIP, ISDN) according to Claim 4,
**characterized**
**in that** the state information comprises the current utilization level of the server functionalities which are present a plurality of times and/or the costs for using them.

6. Communication network(VoIP, ISDN) according to one of the preceding claims,
**characterized**
**in that** a client functionality is designed to retrieve an authorization before using a server functionality.

7. Communication network (VoIP, ISDN) according to Claim 6,
**characterized**
**in that** at least one server functionality is provided for managing the authorizations.

## Revendications

1. Réseau (VoIP, ISDN) de communication,
- comprenant des composants (A1 à A4, B3 à B11) de communication, qui ont des fonctionnalités client et serveur ainsi que
- comprenant des fonctions de recherche associées aux fonctionnalités client pour déterminer les adresses instantanées des composants (A1 à A4, B3 à B11) de communication par lesquelles les fonctionnalités serveur peuvent être utiles,
**caractérisé en ce que**
les informations sur les fonctionnalités serveur d'un composant (A1 à A4, B3 à B11) de communication peuvent être appelées directement et être utilisées par les fonctionnalités client d'autres composants (A1 à A4, B1 à B11, C1 à C3) de communication, les fonctionnalités serveur étant conçues pour mettre à disposition des services utilisables dans le réseau (VoIP, ISDN) de communication.

2. Réseau (VoIP, ISDN) de communication suivant la revendication 1,
**caractérisé**
**en ce que** le réseau (VoIP, ISDN) de communication est constitué avec les composants (A1 à A4, B3 à B11) de communication pour l'auto-administration au moyen des informations déterminées par les fonctions de recherche.

3. Réseau (VoIP, ISDN) de communication suivant la revendication 1 ou 2,
**caractérisé**
**en ce qu'**il y une fonctionnalité serveur plusieurs fois dans le réseau (VoIP, ISDN) de communication et dans plusieurs composants (A1 à A4, B3 à B11) de communication.

4. Réseau (VoIP, ISDN) de communication suivant l'une des revendications précédentes,
**caractérisé**
**en ce que** lorsqu'il y a des fonctionnalités serveur présentes plusieurs fois on peut choisir au moyen d'informations d'état, pour l'utilisation, l'une de ces fonctionnalités serveur.

5. Réseau (VoIP, ISDN) de communication suivant la revendication 4,
**caractérisé**
**en ce que** les informations d'état comprennent la charge de travail instantanée des fonctionnalités serveur présentes plusieurs fois et/ou des coûts pour leur utilisation.

6. Réseau (VoIP, ISDN) de communication suivant l'une des revendications précédentes,
**caractérisé**
**en ce qu'**une fonctionnalité client est constituée pour demander une autorisation avant l'utilisation d'une fonctionnalité serveur.

7. Réseau (VoIP, ISDN) de communication suivant la revendication 6,
**caractérisé**
**en ce qu'**au moins une fonctionnalité serveur est prévue pour gérer les autorisations.
